# EUROPÄISCHE PATENTSCHRIFT

(11) **EP 1 307 957 B1**
(45) Veröffentlichungstag und Bekanntmachung des Hinweises auf die Patenterteilung: **16.06.2004**
(21) Anmeldenummer: 01925180.0
(22) Anmeldetag: 19.04.2001
(51) Int. Cl.: H02K 1/12, H02K 15/02

(54) **STATOR FÜR ELEKTROMOTOREN**
STATOR FOR ELECTRIC MOTORS
STATOR POUR MOTEURS ELECTRIQUES

(30) Priorität: 27.04.2000 AT 7362000
(43) Veröffentlichungstag der Anmeldung: 07.05.2003
(73) Patentinhaber: Verdichter OE. GesmbH, 8280 Fürstenfeld (AT)
(72) Erfinder: SCHÖGLER, Hans, Peter, A-8350 Fehring (AT)
(74) Vertreter: Kliment, Peter
(86) Internationale Anmeldenummer: PCT/AT2001/000120
(87) Internationale Veröffentlichungsnummer: WO 2001/084692

(56) Entgegenhaltungen:
- GB-A- 1 415 592
- US-A- 4 085 347
- US-A- 4 179 630
- US-A- 5 300 846
- US-A- 5 570 503
- PATENT ABSTRACTS OF JAPAN vol. 006, no. 006 (E-089), 14. Januar 1982 (1982-01-14) -& JP 56 129542 A (TOSHIBA CORP), 9. Oktober 1981 (1981-10-09)

## Beschreibung

Die vorliegende Erfindung betrifft einen Stator für Elektromotoren gemäß dem Oberbegriff des Anspruchs 1.

Solche Elektromotoren werden beispielsweise in Kühlschränken verwendet, um den Kolben eines Verdichters anzutreiben, der das Kältemittel verdichtet.

Ein dabei immer wieder auftretendes Problem sind die Vibrationen und Erschütterungen, die vom Verdichter ausgehen und die für den Konsumenten störend sind.

Es wurde nun herausgefunden, dass ein Teil des dabei entstehenden Geräuschpegels vom Stator des Elektromotors ausgeht bzw. übertragen wird. Der lamellenartige Aufbau eines Stators dürfte diese Geräuschentwicklung noch begünstigen, da es sich hier um ein relativ "loses" Gebilde handelt, dass sehr leicht in Schwingungen versetzt werden kann.

Aus der US 4,085,347 ist es bekannt, die einzelnen Statorlamellen miteinander zu verkleben und zu verschweißen. Der Lamellenkörper ist durch Bolzen an das Kompressorgehäuse gepreßt.

Aus der US 4,179,630 ist es bekannt, die Statorlamellen durch Bolzen auszurichten und miteinander zu verbinden. Diese Maßnahmen dienen jedoch der Versteifung und Ausrichtung der Lamellen und sind nicht primär zur Geräuschminderung vorgesehen.

Aus der GB 1 415 592 A ist es bekannt die Polenkanten von stirnseitigen Lamellen aufzubiegen, damit sie die Statorwicklungen sichern.

Aus dem Stand der Technik sind jedoch keinerlei Maßnahmen bekannt, die gezielt der oben erwähnten Geräuschentwicklung entgegenwirken.

Es ist daher eine Aufgabe der vorliegenden Erfindung, einen Stator für einen Elektromotor, insbesondere für den Einsatz in hermetisch gekapselten Kältemaschinen vorzuschlagen, welcher sich gegenüber herkömmlichen Statoren durch eine wesentlich geringere Geräuschentwicklung während des Betriebs des Elektromotors auszeichnet.

Erfindungsgemäß wird dies durch die kennzeichnenden Merkmale des Anspruchs 1 erreicht.

Dabei wurde überraschenderweise festgestellt, dass durch Ausübung eines Druckes auf den Lamellenkörper des Stators, der Geräuschpegel in vielen Frequenzbereichen wesentlich verringert werden kann. Dabei kann der Druck wahlweise an einer Stirnseite des Stators aufgebracht werden oder an beiden gleichzeitig. Jede einzelne Maßnahme verringert den Geräuschpegel. Erfindungsgemäß müssen keine zusätzlichen Bauteile zur Erzielung der Geräuschreduzierung verbaut werden, sondern es kann auf einfache Art und Weise mit den vorhandenen Bauteilen, nämlich den jeweils obersten Lamellen das Ziel erreicht werden. Durch diese Maßnahmen können auch bereits im Einsatz befindliche bzw. bereits gefertigte Statoren entsprechend verbessert werden.

Die Merkmale des Anspruchs 2 bewirken eine weitere Versteifung des Lamellenkörpers des Stators, was sich wiederum positiv auf die Geräuschentwicklung auswirkt.

Die Merkmale der Ansprüche 3 bis 9 beschreiben eine Vorrichtung zur Herstellung einer erfindungsgemäßen Aufkantung der Lamellen des Lamellenkörpers des Stators 1.

Im folgenden folgt nun eine detaillierte Beschreibung eines erfindungsgemäßen Stators anhand von Ausführungsbeispielen. Dabei zeigt:
- Fig.1: eine Seitenansicht eines erfindungsgemäßen Stators mit aufgekanteter oberster Lamelle bzw. mit Träger samt Bohrung
- Fig.2: eine Draufsicht eines erfindungsgemäßen Stators mit aufgekanteter oberster Lamelle

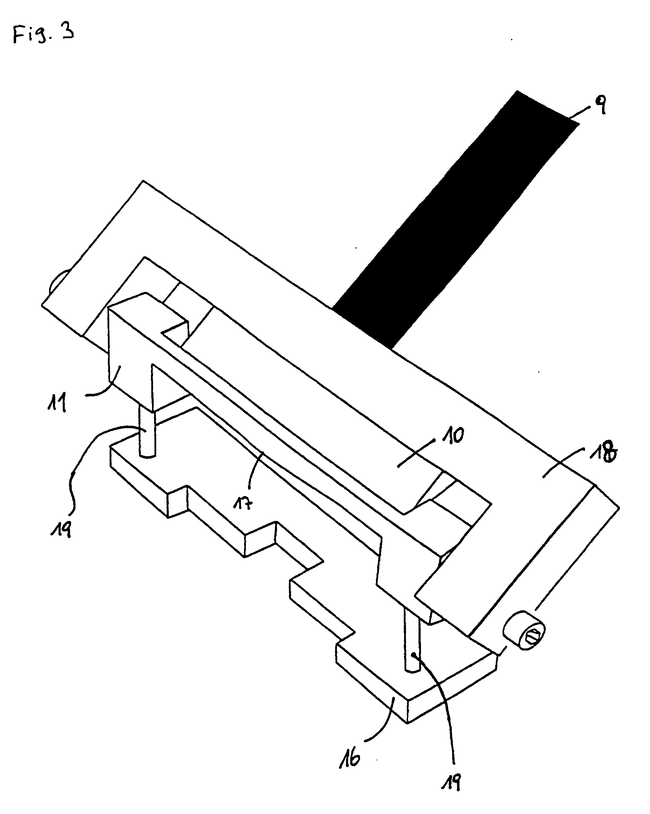

- Fig.3: eine axonometrische Ansicht einer erfindungsgemäßen Aufkantvorrichtung

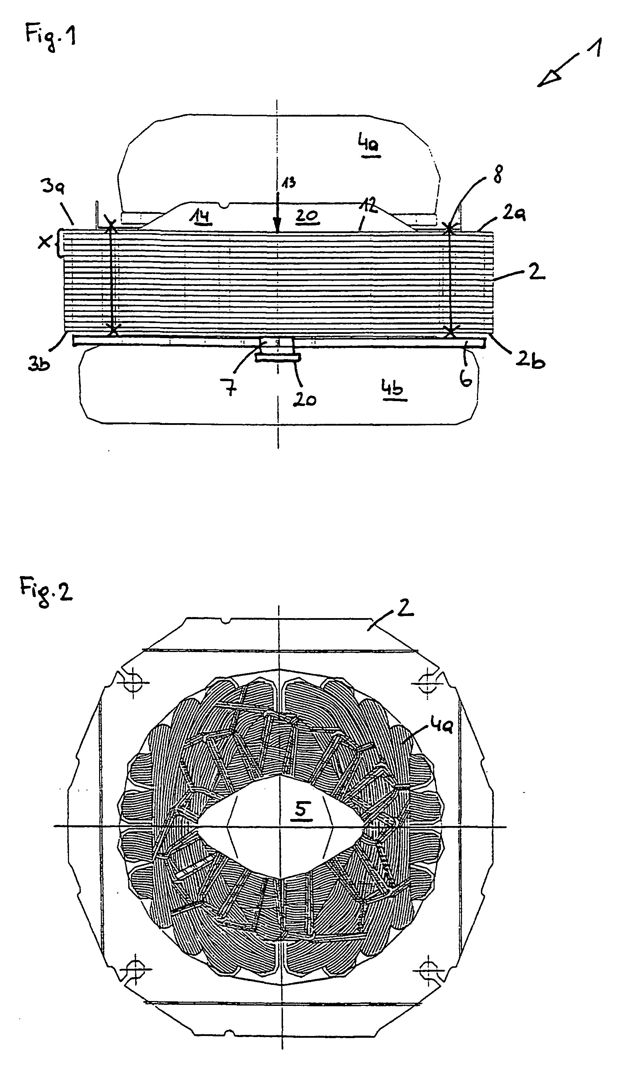

Fig.1 und 2 zeigen einen erfindungsgemäßen Stator 1 mit aufgekanteter oberster Lamelle 2a. Der Stator 1 weist dabei einen Lamellenkörper 2 auf. An den Stirnseiten 3a,3b des Stators 1 sind die Wickelköpfe 4a,4b der Statorwicklung ausgebildet. Die Statorbohrung 5 ist zur Aufnahme eines Läufers zum Antrieb des Kolbens des Verdichters (nicht gezeichnet) vorgesehen.

Die einzelnen Lamellen, welche den Lamellenkörper 2 des Stators 1 aufbauen, sind durch Befestigungsmittel 8 (nur schematisch dargestellt) miteinander fix verbunden und ausgerichtet. Die Befestigungsmittel 8 sind üblicherweise eine gewöhnliche Schrauben/Muttern Kombination. Die einen Endbereiche der Schrauben sind jeweils mit Schutzkappen und die anderen Endbereiche mit Federbolzen, welche den Stator bzw. auch den Elektromotor gegen das Verdichtergehäuse (nicht gezeichnet) abstützen, versehen. Durch den Anzug der Schrauben/Muttern werden die einzelnen Lamellen im Bereich der Schrauben 8 gegeneinandergepresst, wodurch sich der Mittenbereich der Lamellen zwischen den Befestigungsmitteln 8 jedoch gleichzeitig aufbaucht.

Um dies zu verhindern ist die stirnseitige Lamelle 2a aufgekantet, wobei auch wahlweise eine zweite stirnseitige Lamelle 2b aufgekantet sein kann. In letzterem Fall ist die Geräuschdämmung noch wirkungsvoller.

Die Aufkantung erfolgt durch eine spezielle Aufkantvorrichtung (siehe Fig.5). Die Aufkantvorrichtung besteht im wesentlichen aus einem Griff 9, einem zwischen eine aufzukantende (beispielsweise Lamelle 2a) und dazu benachbarte Lamelle einführbaren Biegeteil 10, einem damit zusammenarbeitenden, eine Biegekante 17 aufweisenden Gegenhalteteil 11, sowie einem Spannstück 16, welches das Aufsetzen der Aufkantvorrichtung auf den Lamellenkörper 2 ermöglicht, wobei zumindest ein Teil des Lamellenkörpers 2 zwischen dem Spannstück 16 und dem Gegenhalteteil 11 eingespannt wird. Das Gegenhalteteil 11 weist, wie schon erwähnt, eine Biegekante 17 auf, welche die weiter oben beschriebene Form der letztendlich an der aufgekanteten Lamelle 2a ausgebildeten Biegekante 12 hat. Der Griff 9 ist an einem Rahmen 18 angeordnet, der den Biegeteil 10 mit dem Gegenhalteteil 17 drehbar verbindet. Gegenhalteteil 11 und Spannstück 16 sind mittels Schrauben 19 miteinander verbunden. Durch Veränderung der Schraublänge kann dieser Abstand der Größe des Lamellenkörpers 2, der zwischen dem Gegenhalteteil 11 und dem Spannstück 16 eingespannt wird, angepasst werden.

Biegeteil 10 und Gegenhalteteil 11 sind zumindest um einen Winkel von 90° verschwenkbar, um eine optimale Aufkantung zu ermöglichen.

Die Aufkantvorrichtung wird dabei so an den Stator 1 herangeführt, daß der Biegeteil 10 zwischen die aufzukantende Lamelle (beispielsweise die Lammelle 2a) und die nachfolgende Lamelle eingeführt wird. Der Biegeteil 10 ist zu diesem Zweck entsprechend keilförmig ausgeführt. Die Biegekante 17 des Gegenhalteteils 11 befindet sich dabei auf der dem Biegeteil 10 gegenüberliegenden Seite der aufzukantenden Lamelle (beispielsweise 2a) . Gleichzeitig wird der Lamellenkörper 2 des Stators 1 zwischen Gegenhalteteil 11 und dem Spannstück 16 verspannt. Anschließend wird durch Drehung des Griffs 9 der Biegeteil 10 ebenfalls gedreht, wobei die aufzukantenden Lamelle über die Biegekante 17 des Gegenhalteteils 11 gebogen wird. Die Verspannung des Lamellenkörpers 2 zwischen Gegenhalteteil 11 und Spannstück 16 garantiert eine exakt ausgebildete Biegekante 12 an der aufgekanteten Lamelle 2a.

Durch die spezielle Ausbildung der Biegekante 17 wie erwähnt, wird erreicht, dass mittig zwischen den Befestigungsmitteln 8 der größte Druck auf den Lamellekörper 2 ausgeübt wird.

Anstelle lediglich die oberste Lamelle 2 aufzukanten können auch mehrere Lamellen X gleichzeitig aufgekantet werden.

Durch die Aufkantung lediglich einer stirnseitigen Lamelle konnte der Vibrationspegel im Bereich der aufgekanteten Lamelle in wesentlichen Frequenzbereichen um 10 dB reduziert werden. Durch zusätzliche erfindungsgemäße Maßnahmen wie vorgeschlagen, kann eine noch größer Geräuschminderung erzielt werden.

## Patentansprüche

1. Stator (1) für Elektromotoren für Verdichter insbesondere in hermetisch gekapselten Kältemaschinen mit Statorwicklungen (4a,4b) und einem lamellenförmigen Aufbau, wobei die einzelnen Lamellen (2) mittels Befestigungsmittel (8) zusammengehalten werden und an mindestens einer Stirnseite des Stators (1) zwischen den Befestigungsmitteln (8) Druckmittel (14) vorgesehen sind, welche Druck auf den Lamellenkörper (2) des Stators ausüben, **dadurch gekennzeichnet, dass** die Druckmittel (14) die jeweils stirnseitigen Lamellen (2a,2b,14) des Stators (1) sind, welche in Richtung abgewandt vom restlichen Lamellenkörper (2) aufgebogen sind, wobei deren Biegekante (12) zumindest in ihrem Mittenbereich in Richtung des restlichen Lamellenkörpers (2) gebogen ist.

2. Stator (1) nach Anspruch 1, **dadurch gekennzeichnet, dass** zusätzlich zu den jeweils stirnseitigen Lamellen (2a,2b) auch an diese anschließende Lamellen (X) auf die gleiche Art und Weise aufgebogen sind.

3. Vorrichtung zur Aufkantung einer Statorlamelle (2a,2b) gemäß Anspruch 1 und 2, **dadurch gekennzeichnet, dass** sie folgende Teile umfasst:
- einen zwischen eine aufzukantende und dazu benachbarte Lamelle einführbaren Biegeteil (10)
- einen damit zusammenarbeitenden, die Biegekante (17) aufweisenden Gegenhalteteil (11)
- ein Spannstück (16), welches das Aufsetzen der Aufkantvorrichtung auf den Lamellenkörper (2) ermöglicht,
- wobei zumindest ein Teil des Lamellenkörpers (2) zwischen dem Spannstück und dem Gegenhalteteil (16) eingespannt wird

4. Vorrichtung nach Anspruch 3, **dadurch gekennzeichnet, daß** zusätzlich ein Griff (9) vorgesehen ist.

5. Vorrichtung nach Anspruch 3, **dadurch gekennzeichnet, dass** der Gegenhalteteil (11) und der Biegeteil (10) um mindestens 90° gegeneinander verschwenkbar sind.

6. Vorrichtung nach einem der Ansprüche 3 bis 5, **dadurch gekennzeichnet, daß** der Gegenhalteteil (11) und das Spannstück (16) mittels in ihrer Länge verstellbarer Befestigungselemente (19) verbunden sind.

7. Vorrichtung nach Anspruch 6, **dadurch gekennzeichnet, daß** die Befestigungselemente (19) Schrauben sind.

8. Vorrichtung nach einem der Ansprüche 3 bis 7, **dadurch gekennzeichnet, daß** die Biegekante (17) ausgebaucht ist.

9. Vorrichtung nach einem der Ansprüche 3 bis 8, **dadurch gekennzeichnet, daß** die Biegekante (17) mindestens einen, von der Geraden abweichenden Fortsatz aufweist.

## Claims

1. A stator (1) for electric motors for compressors, especially in hermetically encapsulated refrigerating machines, with stator windings (4a, 4b) and a lamellae-like arrangement, with the individual lamellae (2) being held together by means of fastening means (8) and with pressure means (14) being provided at least on one face side of the stator (1) between the fastening means (8) which exert pressure on the lamellae body (2) of the stator, **characterized in that** the pressure means (14) are the respective face-side lamellae (2a, 2b, 14) of the stator (1) which are bent up in a direction averted from the remaining lamellae body (2), with their bending edge (12) being bent at least in their middle region in the direction towards the remaining lamellae body (2).

2. A stator (1) as claimed in claim 1, **characterized in that** in addition to the face-side lamellae (2a, 2b) lamellae (X) which are adjacent thereto are bent up in a similar manner.

3. An apparatus for bending up a stator lamella (2a, 2b) as claimed in claim 1 and 2, **characterized in that** it comprises the following parts:
- a bending part (10) to be introduced between a lamella to be bent up and one adjacent thereto;
- a brace part (11) cooperating with the same and comprising a bending edge (17);
- a clamping member (16) which allows placing the bend-up apparatus on the lamellae body (2);
- with at least a part of the lamellae body (2) being clamped between the brace part and the clamping member (16).

4. An apparatus as claimed in claim 3, **characterized in that** a handle (9) is additionally provided.

5. An apparatus as claimed in claim 3, **characterized in that** the brace part (11) and the bending part (10) are mutually swivelable about at least 90°.

6. An apparatus as claimed in one of the claims 3 to 5, **characterized in that** the brace part (11) and the clamping member (16) are connected by means of fastening elements (19) which are adjustable in their length.

7. An apparatus as claimed in claim 6, **characterized in that** the fastening elements (19) are screws.

8. An apparatus as claimed in one of the claims 3 to 7, **characterized in that** the bending edge (17) is bulged.

9. An apparatus as claimed in one of the claims 3 to 8, **characterized in that** the bending edge (17) comprises at least one extension deviating from the straight line.

## Revendications

1. Stator (1) pour moteurs électriques pour compresseur, notamment dans des machines frigorifiques hermétiques, avec des enroulements statoriques (4a, 4b) et une structure en forme de lamelles, les différentes lamelles (2) étant maintenues ensemble au moyen de moyens de fixation (8) et des moyens presseurs (14) exerçant une pression sur le corps des lamelles (2) du stator étant prévus entre les moyens de fixation (8) sur au moins une face frontale du stator (1), **caractérisé en ce que** les moyens presseurs (14) sont les lamelles (2a, 2b, 14) du stator (1) qui sont respectivement situées sur les faces frontales et sont recourbées de manière à se détourner du corps de lamelle (2) restant, leur ligne de cambrure (12) étant, du moins dans sa partie centrale, courbée en direction du corps de lamelle (2) restant.

2. Stator (1) selon la revendication 1, **caractérisé en ce que** des lamelles (X) supplémentaires, attenantes aux lamelles (2a, 2b) respectivement situées sur la face frontale, sont recourbées de la même manière.

3. Dispositif pour redresser une lamelle de stator (2a, 2b) selon les revendications 1 et 2, **caractérisé en ce qu'**il comprend les parties suivantes :
- une partie de cambrage (10) apte à être intercalée entre une lamelle à redresser et la lamelle voisine de celle-ci,
- une partie à contre-support (11) coopérant avec la partie de cambrage et comportant la ligne de cambrure (17),
- une pièce de serrage (16) permettant de positionner le dispositif redresseur sur le corps de lamelle (2),
- au moins une partie du corps de lamelle (2) étant serrée entre la pièce de serrage et le contre-support (16).

4. Dispositif selon la revendication 3, **caractérisé en ce qu'**est prévu en outre une poignée (9).

5. Dispositif selon la revendication 3, **caractérisé en ce que** la partie à contre-support (11) et la partie de cambrage (10) sont mobiles en pivotement l'une par rapport à l'autre selon un angle de 90° au moins.

6. Dispositif selon l'une quelconque des revendications 3 à 5, **caractérisé en ce que** la partie à contre-support (11) et la pièce de serrage (16) sont reliées par des éléments de fixation (19) réglables en longueur.

7. Dispositif selon la revendication 6, **caractérisé en ce que** les éléments de fixation (19) sont des vis.

8. Dispositif selon l'une quelconque des revendications 3 à 7, **caractérisé en ce que** la ligne de cambrure (17) est bombée.

9. Dispositif selon l'une quelconque des revendications 3 à 8, **caractérisé en ce que** la ligne de cambrure (17) comporte au moins un prolongement qui ne s'étend pas en ligne droite.
